# EUROPÄISCHE PATENTSCHRIFT

(11) **EP 1 737 094 B1**
(45) Veröffentlichungstag und Bekanntmachung des Hinweises auf die Patenterteilung: **10.08.2011**
(21) Anmeldenummer: 05405397.0
(22) Anmeldetag: 23.06.2005
(51) Int. Cl.: H02G 3/08

(54) **Muffe zum auszugssicheren Einführen eines gewellten Rohres**
Sleeve for a strain relief introduction of a corrugated tube
Manchon pour une retenue sécurisée lors de l'entrée d'un tube ondulé

(43) Veröffentlichungstag der Anmeldung: 27.12.2006
(73) Patentinhaber: AGRO AG, CH-5502 Hunzenschwil (CH)
(72) Erfinder: Andermatt, Urs, 5105 Auenstein (CH); Lehmann, Christoph, 5634 Merenschwand (CH)
(74) Vertreter: Groner, Manfred

(56) Entgegenhaltungen:
- EP-A- 1 322 011
- DE-C- 640 746
- PATENT ABSTRACTS OF JAPAN Bd. 1999, Nr. 09, 30. Juli 1999 (1999-07-30) -& JP 11 122748 A (MIRAI IND CO LTD), 30. April 1999 (1999-04-30)

## Beschreibung

Die Erfindung betrifft eine Muffe nach dem Oberbegriff des Anspruchs 1.

Eine Muffe der genannten Art ist im Stand der Technik durch die EP-A-1 322 011 bekannt geworden. Diese ist an einer Unterputzdose angeformt und besitzt zwei Laschen, die jeweils zwei Rastzähne für unterschiedliche Wellrohrdurchmesser aufweist. Die JP-A-11 122748 offenbart einen Anschlusskasten, der in einer Wandung einen ausschlagbaren Teil aufweist. Durch Ausschlagen dieses Teils wird eine Öffnung mit nach innen ragenden Verbindungsteilen geschaffen, durch die ein Wellrohr einführbar ist. Eine Muffe ist nicht vorgesehen.

Durch die EP 1 365 492 A ist eine Unterputzdose für Elektroinstallationen bekannt geworden, an der mehrere Muffen angeformt sind, die innenseitig angeformte Haltemittel aufweisen. Zum Anschliessen eines Wellrohres an die Unterputzdose wird dieses mit einem Ende in die Muffe eingeschoben, wobei sich die Haltemittel zwischen Rippen des Wellrohres verhaken. Das Wellrohr wird dadurch auszugssicher an der Unterputzdose fixiert. Das befestigte Wellrohr dient insbesondere als Schutzrohr für elektrische Leitungen, welche in der Unterputzdose beispielsweise mit einem Schalter verbunden werden.

Der Erfindung liegt die Aufgabe zugrunde, eine Muffe der genannten Art zu schaffen, die eine einfachere Montage von Wellrohren mit unterschiedlichen Aussendurchmessern ermöglicht.

Die Aufgabe ist bei einer gattungsgemässen Muffe gemäss Anspruch 1 gelöst. Die erfindungsgemässe Muffe weist somit an der Innenseite zweite radial nach innen vorspringende Haltemittel auf, wobei die ersten Haltemittel für gewellte Rohre mit einem vergleichsweise grossen Aussendurchmesser und die zweiten Haltemittel für gewellte Rohre mit einem kleineren Aussendurchmesser vorgesehen sind. An der gleichen Muffe können damit unterschiedlich gewellte Rohre befestigt werden. Dies ermöglicht einen einfacheren Aufbau der Unterputzdose und zudem eine einfachere Montage.

An einem inneren Ende der Muffe ist eine ausschlagbare Membran angeformt ist. Diese Membran ist vorzugsweise betondicht angeformt.

Nach der Erfindung ist vorgesehen, dass die zweiten Mittel an der Membran angeformt sind und durch das Ausschlagen der Membran freigelegt werden. Vorzugsweise weist die Membran Sollbruchstellen auf, welche beim Ausschlagen der Membran eine definierte Kante der genannten zweiten Haltemittel bilden.

Nach einer Weiterbildung der Erfindung ist vorgesehen, dass zwischen den ersten Haltemitteln und den zweiten Haltemitteln eine Schulter als Tiefenanschlag für ein Wellrohr mit einem grösseren Aussendurchmesser angeordnet ist. Vorzugsweise bildet ein Bereich der Innenseite vor dieser Schulter eine Dichtstelle und die Innenseite nach dieser Schulter ebenfalls eine Dichtstelle. Die eine Dichtstelle ist für Wellrohre mit grösserem Aussendurchmesser und die andere für Wellrohre mit kleinerem Aussendurchmesser vorgesehen. Diese Dichtstellen verhindern das Eindringen von Beton in die Unterputzdose.

Nach einer Weiterbildung der Erfindung weisen die zweiten Haltemittel wenigstens ein federndes Rastelement auf. Dieses ist vorzugsweise über eine flexible Dichtmembran an einer Wandung der Muffe angeformt.

Ausführungsbeispiele der Erfindung werden nachfolgend anhand der Zeichnung näher erläutert. Es zeigen:
- Figur 1: eine räumliche Ansicht eines Abschnittes einer Unterputzdose mit erfindungsgemässen Muffen,
- Figur 2: eine räumliche Ansicht einer geschnittenen erfindungsgemässen Muffe,
- Figur 3: eine räumliche Ansicht einer geschnittenen erfindungsgemässen Muffe und ein ebenfalls geschnittenes Wellrohrende vor der Einführung in die Muffe,
- Figur 4: eine Ansicht gemäss Figur 3, jedoch mit eingeschobenem Wellrohr,
- Figur 5: eine Ansicht gemäss Figur 3, jedoch mit einem Wellrohr mit kleinerem Aussendurchmesser,
- Figur 6: eine räumliche Ansicht einer geschnittenen erfindungsgemässen Muffe mit einem angeschlossenem Wellrohr, wobei dieses einen kleineren Aussendurchmesser aufweist,
- Fig. 7 bis 9: Teilansichten einer erfindungsgemässen Muffe nach einer Variante und
- Fig. 10 und 11: Teilansichten einer erfindungsgemässen Muffe nach einer weiteren Variante.

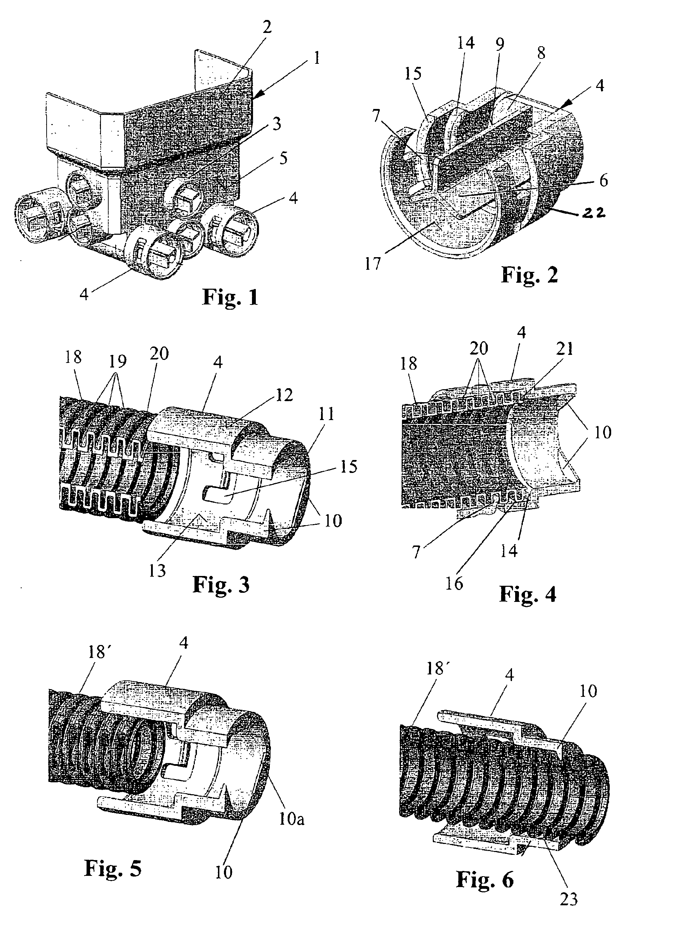

Die Figur 1 zeigt eine Unterputzdose 1 insbesondere für die Elektroinstallation. Sie besitzt eine Seitenwandung sowie einen hier nicht gezeigten Boden. Die Form der Unterputzdose 1 kann unterschiedlich sein, sie kann somit kastenförmig, rechteckig, rund oder auch beispielsweise oval sein. Anstelle der Unterputzdose 1 kann auch ein anderes Installationsprodukt, beispielsweise ein Lampendübel oder ein Schalungsschoner vorgesehen sein.

An der Wandung 2 sind einstufige Muffen 3 angebracht und insbesondere angeformt, die für eine Beschaltung mit einem Wellrohr mit einem bestimmten Aussendurchmesser vorgesehen sind. Sie stehen an einer Aussenseite 5 der Unterputzdose 1 vor. An der Wandung 2 sind zudem zweistufige Muffen 4 angeformt, die ebenfalls an der Aussenseite 5 rechtwinklig vorstehen und die jeweils eine zylindrische Aussenseite 12 besitzen. Die zweistufigen Muffen 4 weisen gemäss Figur 2 eine kreisrunde Öffnung 17 auf, in welche gemäss Figur 3 ein Wellrohr 18 oder ein Wellrohr 18' einschiebbar ist. An einem inneren Ende der Öffnung 17 ist an einer hohlzylindrischen Wandung 22 der zweistufigen Muffe 4 eine Membran 8 angeformt, an welcher wiederum ein Schlagkreuz 6 angeformt ist. Am Umfang der Membran 8 verläuft gemäss Figur 2 eine Sollbruchstelle 9, entlang welcher die Membran 8 mit dem Schlagkreuz 6 ausgeschlagen werden kann. Bei ausgeschlagener Membran 8 weist das innere Ende der Muffe 4 eine unrunde Öffnung 11 auf. Die Sollbruchstelle 9 verläuft so, dass nach dem Ausschlagen der Membran an der hohlzylindrischen Wandung 22 drei symmetrisch angeordnete und radial nach innen in die Öffnung 11 ragende Halterippen 10 stehen bleiben. Diese Halterippen 10 besitzen gerade angefaste Kanten 10a. Denkbar ist auch eine Ausführung mit lediglich einer solchen Halterippe 10 oder mehr als drei Halterippen 10. Vor dem Ausschlagen bildet die Membran 8 eine Dichtung und verhindert das Eindringen von Beton. Die Halterippen 10 bilden zweite Haltemittel zum auszugssicheren Befestigen eines in den Figuren 5 und 6 gezeigten Wellrohres 18', das einen kleineren Aussendurchmesser besitzt als das in den Figuren 3 und 4 gezeigte Wellrohr 18. Die Figur 5 zeigt, wie das Wellrohr 18' durch die Öffnung 17 in die zweistufige Muffe 4 eingesetzt wird. Beim weiteren Einschieben des Wellrohres 18' erreicht dieses schliesslich die Halterippen 10. Diese sind so ausgebildet, dass das Wellrohr 18' weiter nach innen geschoben werden kann, bis gemäss Figur 6 dieses mit einem vorderen Ende innenseitig aus der zweistufigen Muffe 4 herausragt. Die Halterippen 10 rasten hierbei in eine umlaufende Rille 20 (Fig. 3) des Wellrohres 18' ein. Solche Rillen 20 sind jeweils zwischen zwei Rippen 19 angeordnet. Die im Querschnitt zahnförmig ausgebildeten Halterippen 10 halten das eingeschobene Wellrohr 18' so fest, dass es nicht mehr zurück aus der Muffe 4 herausgezogen werden kann. Vor den Halterippen 10 befindet sich eine kreisrunde Dichtfläche, welche beim eingeschobenen Wellrohr 18' eine Dichtstelle 23 bildet. Diese Dichtstelle 23 verhindert ein Eindringen von Beton in das Innere der Unterputzdose 1.

Anstelle des Wellrohres 18' kann wahlweise ein Wellrohr 18 mit einem grösseren Aussendurchmesser an der zweistufigen Muffe 4 angeformt sein. Die Figuren 3 und 4 zeigen das Einschieben eines solchen Wellrohres 18. Zum Festhalten dieses Wellrohres 18 sind an der Innenseite 13 zahnförmig nach innen ragende Halteteile 7 angeordnet, die radial nach aussen federelastisch auslenkbar sind. Diese Halteteile 7 ragen jeweils in eine Ausnehmung 15 der Wandung 22, wie beispielsweise die Figuren 2 und 3 zeigen. Das Wellrohr 18 wird bis zu einer Schulter 14 eingeschoben, an welcher schliesslich gemäss Figur 1 eine Frontseite 21 des Wellrohres 18 anliegt. Die Schulter 21 bildet somit einen Tiefenanschlag für das Wellrohr 18. Vor der Schulter 14 wird eine Dichtstelle 16 gebildet, die ebenfalls das Eindringen von Beton verhindert. Ist das Wellrohr 18 bis zur Schulter 14 eingeschoben, so greifen die zahnförmigen Halteteile 7 in eine Rille 20 ein und halten damit das Wellrohr 18 auszugssicher an der Muffe 4 bzw. an der Unterputzdose 1.

Die Halteteile 7 sind gemäss Figur 2 unterhalb der Mittelebene der Muffe 4 angeordnet, was ermöglicht, dass die Geometrie quer entformt werden kann.

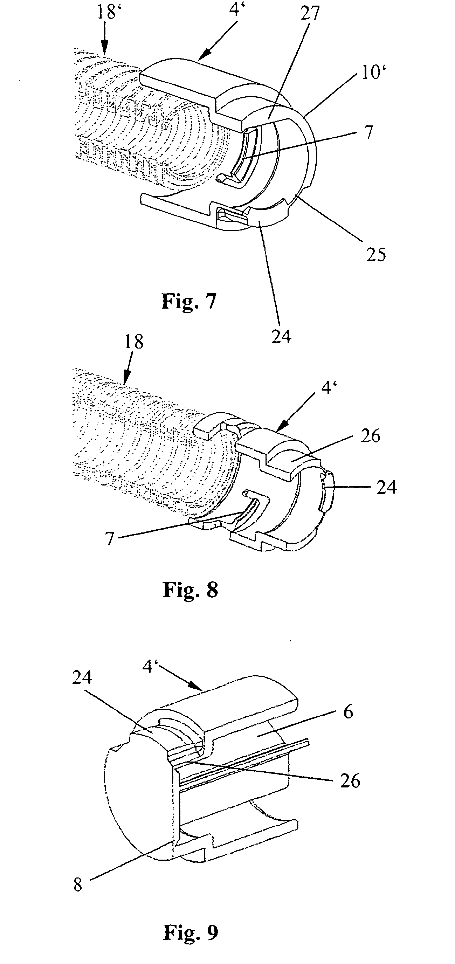

Die Figuren 7 bis 9 zeigen eine erfindungsgemässe Muffe 4', die ebenfalls zur Aufnahme eines kleinen Wellrohres 18' oder eines grossen Wellrohres 18 vorgesehen ist. Zum Halten des kleinen Wellrohres 18' ist bei dieser Muffe ein Rastelement 24 vorgesehen, das über eine vergleichsweise dünne, flexible Dichtmembran 25 mit einer Wandung 26 der Muffe 4' verbunden ist. Diese flexible Dichtmembran 25 gewährleistet die Betondichtigkeit der Muffe 4'. Bei angeschlagenem Schlagkreuz 6 ermöglicht die flexible Dichtmembran 25 ein radiales und elastisches Auslenken des Rastelementes 24 beim Einschieben des kleinen Wellrohres 18'.

Diagonal gegenüber dem Rastelement 24 ist ein im Wesentlichen starres Rastelement 27 angeordnet, das aber ebenfalls elastisch ausgebildet sein kann. Die Rastelemente 24 und 27 ermöglichen ein noch einfacheres und funktionssicheres Einführen des kleinen Wellrohres 18'. Bei der Muffe 4' bilden die Rastelemente 24 und 27 somit Haltemittel 10' für das kleine Wellrohr 18'. Die Figur 7 zeigt die Muffe 4' mit teilweise eingeführtem Wellrohr 18'. Beim weiteren Einführen rasten schliesslich die Rastelemente 24 und 27 aussenseitig am Wellrohr 18' ein. Die Figur 9 zeigt die Muffe 4' mit angeformtem Schlagkreuz 6, das wie erwähnt vor dem Einführen des kleineren Wellrohres 18' oder des grösseres Wellrohres 18 ausgeschlagen wird.

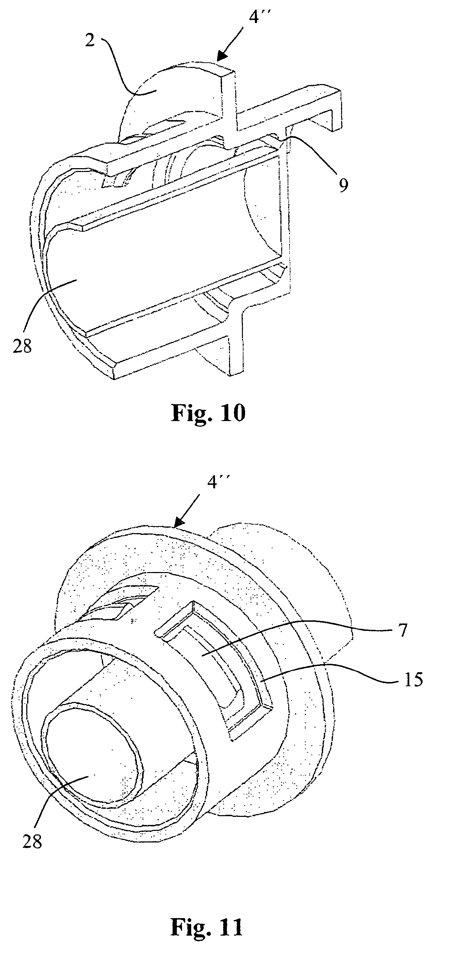

Die Figuren 10 und 11 zeigen eine Muffe 4", bei welcher das oben genannte Schlagkreuz 6 durch eine Schlaghülse 28 ersetzt ist. Die Funktion der Schlaghülse 28 ist die gleiche wie diejenige des Schlagkreuzes 6, ermöglicht jedoch eine wesentlich einfachere und kostengünstigere Herstellung.

### Bezugszeichenliste

- 1: Unterputzdose
- 2: Wandung
- 3: einstufige Muffe
- 4: zweistufige Muffen
- 4': zweistufige Muffe
- 5: Aussenseite
- 6: Schlagkreuz
- 7: Halteteil
- 8: Membran
- 9: Sollbruchstelle
- 10: Haltemittel
- 10': Haltemittel
- 10a: Faseneinlauf
- 11: Öffnung
- 12: Muffenaussenseite
- 13: Muffeninnenseite

- 14: Schulter (Tiefenanschlag)
- 15: Ausnehmung
- 16: Dichtstelle
- 17: Öffnung
- 18: Wellrohr (gross)
- 18': Wellrohr (klein)
- 19: Rippen
- 20: Rillen
- 21: Frontseite
- 22: Wandung
- 23: Dichtstelle
- 24: Rastelement (flexibel)
- 25: Dichtmembran
- 26: Wandung
- 27: Rastelement (starr)
- 28: Schlaghülse

## Patentansprüche

1. Muffe zum auszugssicheren Einführen eines gewellten Rohres (18, 18') beispielsweise in eine Unterputzdose (1), mit einer hohlzylindrischen Wandung (22), die an einer Innenseite (13) radial nach innen vorspringende Haltemittel (7) aufweist, wobei an der Innenseite (13) der Wandung (22) zweite nach innen vorspringende Haltemittel (10, 10') für ein Wellrohr (18') mit kleinerem Aussendurchmesser angeordnet sind, **dadurch gekennzeichnet, dass** an einem inneren Ende einer Öffnung (17) der Muffe (4) eine ausschlagbare Membran (8) angeformt ist, dass die zweiten Mittel (10, 10') an der Membran (8) angeformt sind und durch das Ausschlagen der Membran (8) freigelegt werden.

2. Muffe nach Anspruch 1, **dadurch gekennzeichnet, dass** die zweiten Mittel (10, 10') über eine Sollbruchstelle (9) mit der Membran (8) verbunden sind.

3. Muffe nach Anspruch 1 oder 2, **dadurch gekennzeichnet, dass** an der Membran (8) ein Schlagkreuz (6) oder dergleichen angeformt ist.

4. Muffe nach einem der Ansprüche 1 bis 3, **dadurch gekennzeichnet, dass** zwischen den ersten Haltemitteln (7) und den zweiten Haltemitteln (10, 10') eine Schulter (14) als Tiefenanschlag für ein Wellrohr (18) mit einem grösseren Aussendurchmesser angeordnet ist.

5. Muffe nach einem der Ansprüche 1 bis 4, **dadurch gekennzeichnet, dass** die zweiten Haltemittel (10, 10') so ausgebildet sind, dass das Wellrohr (18') mit dem kleineren Aussendurchmesser mit einem inneren Ende durch die Muffe (4) hindurchschiebbar ist.

6. Muffe nach einem der Ansprüche 1 bis 5, **dadurch gekennzeichnet, dass** sie an einer Wandung (2) einer Dose (1) und insbesondere einer Unterputzdose angeformt ist.

7. Muffe nach einem der Ansprüche 1 bis 6, **dadurch gekennzeichnet, dass** die ersten Haltemittel (7) wenigstens einen radial nach aussen auslenkbaren Rastzahn aufweisen.

8. Muffe nach einem der Ansprüche 1 bis 7, **dadurch gekennzeichnet, dass** die zweiten Haltemittel (10') wenigstens eine Rippe mit einem Fasenverlauf (10a) aufweisen.

9. Muffe nach einem der Ansprüche 1 bis 8, **dadurch gekennzeichnet, dass** die ersten Haltemittel (7) im Hinblick auf ein einfacheres Entformen unterhalb der Mittelebene der Muffe angeordnet sind.

10. Muffe nach einem der Ansprüche 1 bis 9, **dadurch gekennzeichnet, dass** die zweiten Haltemittel (10') wenigstens ein elastisch radial auslenkbares Rastelement (24) aufweisen.

11. Muffe nach Anspruch 10, **dadurch gekennzeichnet, dass** das auslenkbare Rastelement (24) mit einer Dichtmembran (25) mit einer Wandung (26) der Muffe (4') verbunden ist.

## Claims

1. Sleeve for the extraction-proof insertion of a corrugated tube (18, 18') for example into a flush-type box (1), comprising a hollow cylindrical wall (22) which is provided on an inner side (13) with radially inwardly projecting retaining means (7), wherein second inwardly projecting retaining means (10, 10') for a corrugated tube (18') having a smaller outside diameter are arranged on the inner side (13) of the wall (22), **characterized in that** a knockout membrane (8) is integrally formed at an inner end of an opening (17) of the sleeve (4), and **in that** the second means (10, 10') are integrally formed on the membrane (8) and are exposed by the membrane (8) being knocked out.

2. Sleeve according to Claim 1, **characterized in that** the second means (10, 10') are connected to the membrane (8) via a predetermined breaking point (9).

3. Sleeve according to Claim 1 or 2, **characterized in that** an impact cross (6) or the like is integrally formed on the membrane (8).

4. Sleeve according to one of Claims 1 to 3, **characterized in that** a shoulder (14) serving as a depth stop for a corrugated tube (18) having a larger outside diameter is arranged between the first retaining means (7) and the second retaining means (10, 10').

5. Sleeve according to one of Claims 1 to 4, **characterized in that** the second retaining means (10, 10') are designed in such a way that the corrugated tube (18') having the smaller outside diameter can be pushed through the sleeve (4) by an inner end.

6. Sleeve according to one of Claims 1 to 5, **characterized in that** it is integrally formed on a wall (2) of a box (1) and in particular a flush-type box.

7. Sleeve according to one of Claims 1 to 6, **characterized in that** the first retaining means (7) have at least one radially outwardly deflectable latching tooth.

8. Sleeve according to one of Claims 1 to 7, **characterized in that** the second retaining means (10') have at least one rib with a bevelled profile (10a).

9. Sleeve according to one of Claims 1 to 8, **characterized in that**, with a view to simpler demoulding, the first retaining means (7) are arranged below the centre plane of the sleeve.

10. Sleeve according to one of Claims 1 to 9, **characterized in that** the second retaining means (10') have at least one elastically radially deflectable latching element (24).

11. Sleeve according to Claim 10, **characterized in that** the deflectable latching element (24) is connected by a sealing membrane (25) to a wall (26) of the sleeve (4').

## Revendications

1. Manchon pour l'insertion sécurisée d'un tube ondulé (18, 18'), par exemple dans une boîte encastrée (1), comprenant une paroi cylindrique creuse (22), qui présente sur un côté intérieur (13) des moyens de retenue (7) saillant radialement vers l'intérieur, des deuxièmes moyens de retenue (10, 10') saillant vers l'intérieur pour un tube ondulé (18') de plus petit diamètre extérieur étant disposés sur le côté intérieur (13) de la paroi (22), **caractérisé en ce qu'**une membrane flexible (8) est façonnée sur une extrémité intérieure d'une ouverture (17) du manchon (4), **en ce que** les deuxièmes moyens (10, 10') sont façonnés sur la membrane (8) et sont libérés par la flexion de la membrane (8).

2. Manchon selon la revendication 1, **caractérisé en ce que** les deuxièmes moyens (10, 10') sont connectés à la membrane (8) par le biais d'un point destiné à la rupture (9).

3. Manchon selon la revendication 1 ou 2, **caractérisé en ce qu'**un croisillon d'impact (6) ou similaire est façonné sur la membrane (8).

4. Manchon selon l'une quelconque des revendications 1 à 3, **caractérisé en ce qu'**un épaulement (14) est disposé entre les premiers moyens de retenue (7) et les deuxièmes moyens de retenue (10, 10') en tant que butée de profondeur pour un tube ondulé (18) avec un diamètre extérieur plus grand.

5. Manchon selon l'une quelconque des revendications 1 à 4, **caractérisé en ce que** les deuxièmes moyens de retenue (10, 10') sont réalisés de telle sorte que le tube ondulé (18') de plus petit diamètre extérieur puisse être enfoncé avec une extrémité intérieure à travers le manchon (4).

6. Manchon selon l'une quelconque des revendications 1 à 5, **caractérisé en ce qu'**il est façonné sur une paroi (2) d'une boîte (1) et notamment d'une boîte encastrée.

7. Manchon selon l'une quelconque des revendications 1 à 6, **caractérisé en ce que** les premiers moyens de retenue (7) présentent au moins une dent d'encliquetage pouvant être déviée radialement vers l'extérieur.

8. Manchon selon l'une quelconque des revendications 1 à 7, **caractérisé en ce que** les deuxièmes moyens de retenue (10') présentent au moins une nervure avec une allure en biseau (10a).

9. Manchon selon l'une quelconque des revendications 1 à 8, **caractérisé en ce que** les premiers moyens de retenue (7) sont disposés en dessous du plan médian du manchon dans le but de faciliter le démoulage.

10. Manchon selon l'une quelconque des revendications 1 à 9, **caractérisé en ce que** les deuxièmes moyens de retenue (10') présentent au moins un élément d'encliquetage (24) pouvant être dévié élastiquement radialement.

11. Manchon selon la revendication 10, **caractérisé en ce que** l'élément d'encliquetage (24) pouvant être dévié est connecté par une membrane d'étanchéité (25) à une paroi (26) du manchon (4').
